Europäisches Patentamt

(19) European Patent Office

Office européen des brevets

(11) Publication number: **0 212 869**
**A1**

(12) **EUROPEAN PATENT APPLICATION**

(21) Application number: **86305771.7**

(22) Date of filing: **28.07.86**

(51) Int. Cl.⁴: **H 01 R 43/042**

(30) Priority: **03.08.85 GB 8519554**

(43) Date of publication of application: **04.03.87**
**Bulletin 87/10**

(84) Designated Contracting States: **DE FR GB**

(71) Applicant: **LUCAS INDUSTRIES public limited company, Great King Street, Birmingham, B19 2XF West Midlands (GB)**

(72) Inventor: **Kane, Gary, 12 Applecroft Madeley, Nr. Crewe Cheshire (GB)**
Inventor: **Ball, Lewis John, The Pines Manor Road, Newcastle Staffordshire (GB)**

(74) Representative: **Carpenter, David et al, MARKS & CLERK Alpha Tower Suffolk Street Queensway, Birmingham B1 1TT (GB)**

(54) **Pneumatic press.**

(57) A security driving mechanism for a pneumatic press comprising a pneumatic ram (34) positioned with its longitudinal axis generally transverse to the direction of movement of a tool holder (13) and having its piston (36) co-operable with a roller (42) whereby operating movement of said piston (36) is translated into operative movement of the tool holder (13) in a direction substantially perpendicular to the direction of movement of said piston (36), preventing operative movement of said piston (36) relative to said tool holder (13) until the tool holder (13) has been moved from a rest position to a predetermined point in its path of movement towards the fixed tool support (12), a lost motion connection (16, 17) between said tool holder (13) and said lever (23) and, first and second control devices (31, 33) both of which must simultaneously be in an actuated state in order for said ram (34) to be energised.

0212869

# PNEUMATIC PRESS

This invention relates to a pneumatic press particularly, but not exclusively, a crimping press for securing electrical terminals to respective conductive leads.

British patent number 1091061, the whole disclosure of which is imported herein by reference, discloses an air operated press having an arrangement of valves ensuring that the press cannot be operated under air power until the moving tool of the press has been brought manually into engagement with a workpiece correctly seated on the fixed tool of the press. The arrangement disclosed in British Patent 1091061 thus achieves operator safety without the need to provide a guard around the tool area of the press.

The arrangement disclosed in British Patent 1091061 has proved very satisfactory in use, but there are two areas of operation in which it is desired to achieve an improvement. Firstly, it is recognised that if, as an improper short-cut in the operation or setting-up of the press, the valve 22 is operated manually, by some means other than the cam 38, then part of the safety mechanism of the press is defeated, and secondly, the press, when power operated, has a hammer-like impact action generating noise and vibration. It is an object of the present invention to provide a pneumatic press of the general type disclosed in British patent 1091061 but wherein the above mentioned first and second disadvantages are minimised.

In accordance with the present invention there is provided a pneumatic press comprising, a frame, a fixed tool support carried by the frame, a movable tool holder mounted for rectilinear sliding movement on the frame, towards and away from said fixed tool support, manually operable means for manually moving said tool holder relative to said frame towards said fixed tool support, a pneumatic ram positioned with its longitudinal axis generally transverse to the direction of movement said tool holder and having its piston co-operable with said tool holder by way of movement translation means whereby operating movement of said piston is translated into operative movement of the tool holder in a direction substantially perpendicular to the direction of movement of said piston, co-operating abutment means on said ram piston and said tool holder physically preventing operative movement of said piston relative to said tool holder until the tool holder has been moved from a rest position to a predetermined point in its path of movement towards said fixed tool support, said predetermined point corresponding substantially to the point at which a tool carried by the tool holder in use would engage correctly with a workpiece properly seated on a fixed tool carried in use by said fixed tool support, a lost motion connection between said tool holder and said manually operable means whereby said manually operable means can move through a predetermined stroke relative to said tool holder against the action of resilient means, and, first and second control devices both of which must simultaneously be in an actuated state in order for said ram to be energised, a first of said control devices being actuated as a result of relative movement between said manually operable means and said tool holder, and the second of said control devices being actuated by said manually operable means reaching a position relative to said frame corresponding to said tool holder reaching its said predetermined position and substantially the whole of said stroke of movement of said manually operable means relative to said tool holder having been accomplished.

Preferably said movement translation means comprises a roller carried by one of the two components constituted by the tool holder and the piston, and a surface engagable with said roller and carried by the other of said components.

Preferably the roller is rotatably mounted on said tool holder and said surface is carried by said piston.

Desirably said abutment means on said piston comprises an abutment surface extending parallel to the direction of movement of said tool holder.

One example of the present invention is illustrated in the accompanying drawings wherein

Figure 1 is a diagramatic, side elevational view of a pneumatic press,

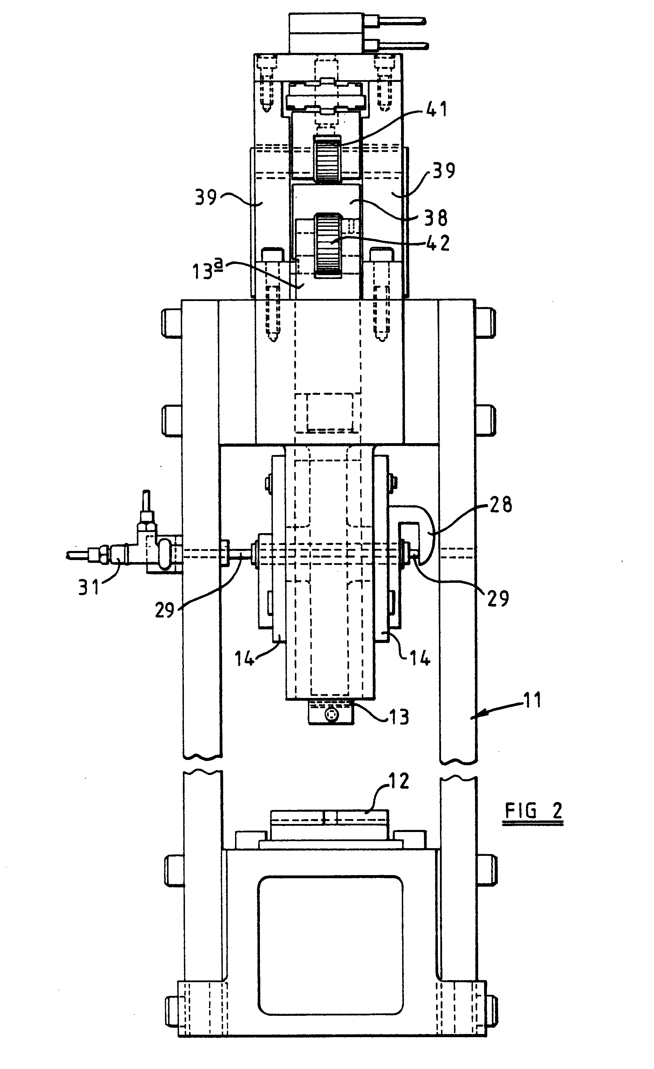

Figure 2 is a view in the direction of arrow A in Figure 1 with parts thereof omitted for clarity,

Figure 3 is a sectional view on the line X-X in Figure 1, and

Figure 4 is a pneumatic circuit diagram of the press and it operating system.

Referring to the drawings, it will be recognised that the basic construction of the press is extremely similar to that disclosed in British patent specification 1091061. Thus the press includes a fixed frame 11 including a fixed tool support 12 upon which a fixed tool (not shown) is mounted in use. Mounted for rectilinear sliding movement on the frame 11 is a moveable tool holder 13, the tool holder 13 being moveable towards and away from the support 12. The lower end of the tool holder 13 is adapted to receive a tool to co-act with the fixed tool carried by the support 12. The press may for example be a crimping press in which case the fixed and moveable tools will be arranged to crimp an electrical terminal around one or more associated electrical leads.

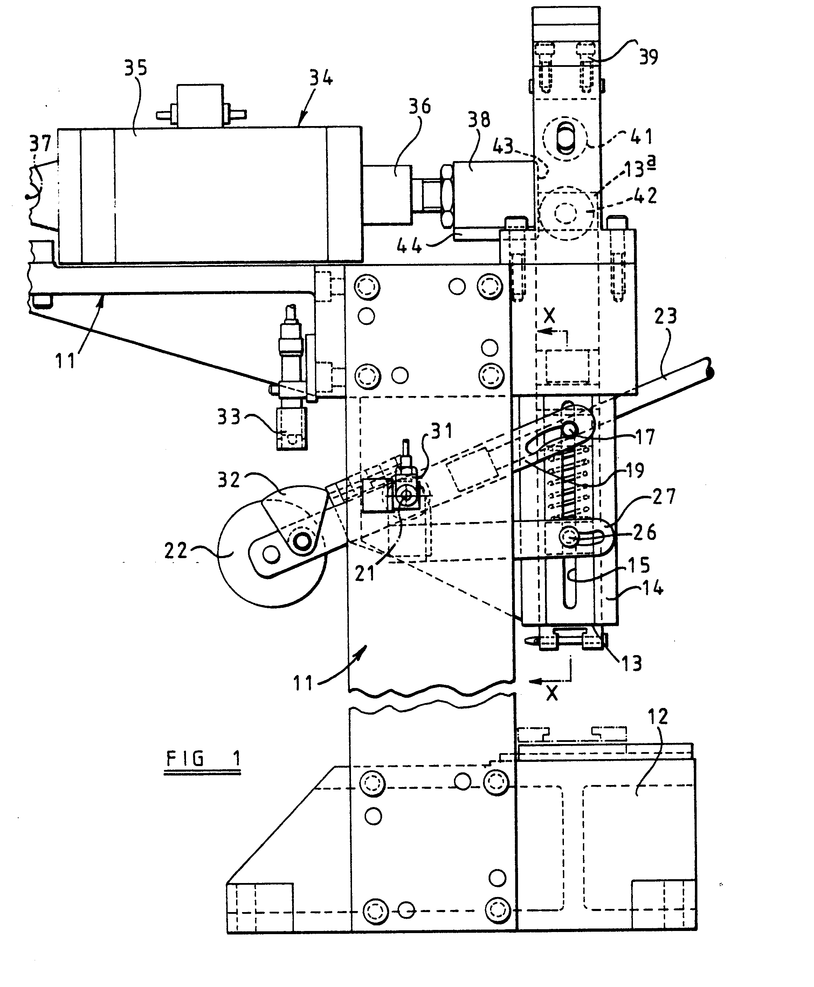

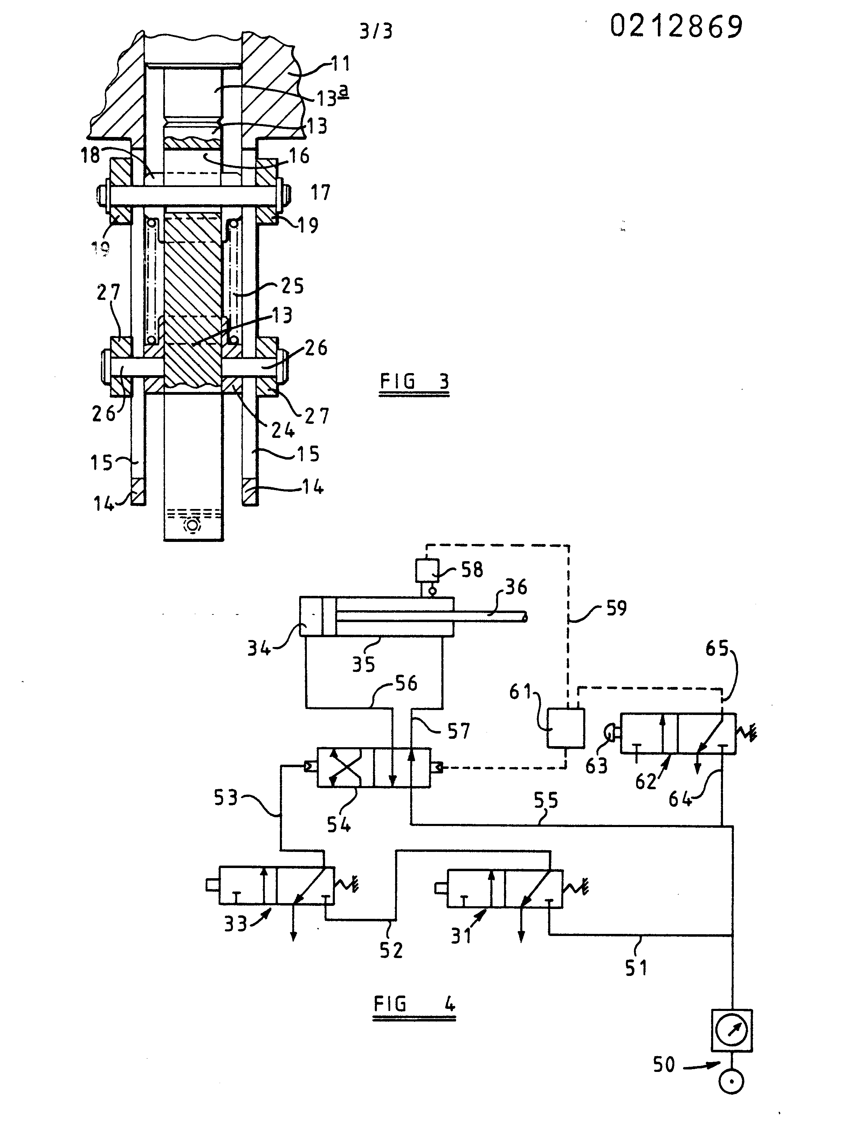

The frame 11 includes a pair of parallel, vertically extending plates 14 between which the tool holder 13 is received (best seen in Figure 3). Each of the plates 14 is formed with an elongate vertically extending slot 15 and extending through the slots 15 and through an elongate slot 16 in the tool holder 14 is a strong metal rod 17. A spring abutment collar 18 encircles the tool holder 13 in the region of the rod 17, and the rod 17 passes through the collar 18. At it outer ends the rod 17 passes through arcuate slots in respective main operating levers 19. Both levers 19 are mounted for pivotal movement relative to the frame 11 about an axis 21 (best seen in Figure 1). At their ends remote from the pin 17 the levers 19 are interconnected by a counterbalance weight 22. One of the levers 19 has rigidly secured thereto an operating arm 23 which projects forwardly of the press for manual operation. Movement of the arm 23 moves the levers 19 in unison as a single component.

The spring abutment collar 18 is moveable relative to the tool holder 13 in the direction of the length of the tool holder 13 by an amount determined by the difference between the diameter of the rod 17 and the length of the slot 16. Also encircling the tool holder 13, but fixed thereto, is a second spring abutment collar 24, a compression spring 25 encircling the tool holder 13 between the collars 18, 24. Protruding outwardly from the collar 24 are first and second diametrically opposed spigots 26, the spigots 26 extending through the slots 15 and being received in arcuate slots at one end of respective auxiliary operating levers 27. The ends of the auxiliary operating levers 27 remote from the spigots 26 are pivotally connected to the frame 11 for movement about the axis 21.

It should be noted that Figure 1 shows the parts in a rest position, while Figure 3 shows the parts in an operated position. Thus in order for Figure 3 to correspond exactly with Figure 1 the rods 17 should be considered to be at, or closely adjacent, the upper end of the slots 15, and also at, or closely adjacent, the upper end of the slot 16 in the tool holder 13. The spring 25 will be substantially fully extended, in that the maximum permitted spacing will exist between the rod 17 and the spigots 26.

In the event that the arm 23 is depressed against the weight of the counterbalance weight 22 then the levers 19 and 27 and the tool holder 13 will move substantially as a single unit with the ends of the rods 17 moving along the arcuate slots of the levers 19 and the spigots 26 moving along the arcuate slots of the auxiliary levers 27. When the moveable tool carried by the tool holder 13 abuts the workpiece seated on the fixed tool carried by the support 12 further movement of the tool holder 13 will be resisted. Continued movement of the arm 23 will cause the levers 19 to continue to pivot about the axis 21 but since the tool holder 13 cannot move, the levers 27 will also remain stationary. Thus the spring 25 will be compressed and the rods 17 will move along the length of the slot 16 in the tool holder 13. The moveable tool will thus be loaded against the work piece by the stressing of the spring 25. The levers 19 will be moving angularly with respect to the auxiliary operating levers 27, and this relative angular movement is utilized to pivot a stirrup member 28 which in turn pushes a transversly extending and slidable push rod 29 which, at its free end co-operates with, and actuates a first valve 31.

Adjacent the counterbalance weight 22 one of the levers 19 carries a cam member 32 the position of which is adjustable. The cam member 32 can co-operate with a second valve 33, to actuate the second valve 33 and the arrangement is such that the valve 33 can only be actuated when the levers 19 have reached a point in their angular movement about the axis 21 which corresponds to a moveable tool having correctly engaged a work piece properly seated on a fixed tool, and substantially the whole of the lost motion of the levers 19 relative to the tool holder 13, against the action of the spring 25, has been absorbed. The cam 32 is adjusted so that the valve 33 can only be actuated in these conditions. It will be recognised therefore that the first valve 31 will be actuated when the movement of the tool holder 13 is arrested, and relative movement between the levers 19 and the tool holder 13 occurs. However, the valve 33 can only be actuated at the predetermined point in the range of permitted angular movement of the levers 19.

The valves 31 and 33 are associated with the control mechanism of a pneumatic ram 34. The ram 34 includes a cylinder 35 and a piston 36 and the ram 34 is positioned with its longitudinal axis substantially transverse to the direction of movement of the tool holder 13. At its end remote from the tool holder 13 the cylinder 35 of the ram 34 is secured to the frame 11 for swinging movement about a horizontal axis (indicated at 37 in Figure 1). The piston 36 of the ram 34 protrudes towards the plane in which the tool holder 13 moves, and at its free end includes an actuator block 38. The actuator block 38 can pass between a pair of parallel spaced upright members 39 of the frame 11 so as to pass beneath a thrust roller 41 journalled for rotation between the upright members 39. Slidably mounted in the frame 11 above the tool holder 13, and abuting the tool holder 13 is a tool holder extension 13a which, at its upper end remote from the tool holder 13, carries a roller 42 journalled therein for rotation about an axis at right angles both to the direction of movement of the tool holder 13 and the direction of movement of the ram piston 36. The roller 42 has a diameter slightly smaller than the thickness of the extension 13a, and is positioned within the extension 13a such that the roller only protrudes beyond the surface of the extension 13a at the upper most free end of the extension 13a.

In the rest position of the components of the press, that is to say the upper most position of the tool holder 13 and tool holder extension 13a the vertically extending wall of the extension 13a is aligned with a vertically extending end abutment surface 43 of the block 38. Thus if the ram 34 were to be actuated with the components of the press in their rest position then operative movement of the ram piston 36 would be prevented by a abutment of the surface 43 of the block 38 with the extension 13a. In order for a hardened slipper 44 at the lower face of the block 38 to co-operate with the roller 42 and so apply ram force to the tool holder 13 it is necessary first for the tool holder 13 and the extension 13a to be moved downwardly within their stroke sufficiently far for the upper, free end of the extension 13a to align with the lower face of the slipper 44. Thereafter the abutment between the block 38 and the extension 13a is removed, and the substantially horizontal outward movement of the piston 36 will cause the slipper 44 to co-operate with the roller 42 and thus perform a small but forceful power stroke of the tool holder 13 and the tool carried thereby. During this power stroke the thrust roller 41 ensures that the block 38 is not deflected upwardly and that the full loading is applied by way of the roller 42 and the extension 13a to the tool holder 13.

The arrangement of the tool holder 13, extension 13a and block 38 is such that in order for the edge of the extension 13a to clear the slipper 44 and thus permit the stroke of the piston 36 to take place then the tool holder 13 must be moved downwardly sufficiently far for the tool carried by the tool holder 13 properly to contact a workpiece properly seated on the fixed tool of the support 12. Additionally, before air under pressure is admitted to the cylinder 35 of the ram 34 to perform the power stroke of the ram 34 both the valve 31 and the valve 33 must simultaneously be in an actuated state.

It will be recognised that the press needs no guard around the fixed and moveable tools, since the press cannot be power operated unless the moveable tool correctly engages the workpiece which in turn must properly be seated upon the fixed tool. In the event that an operator has his finger between the moveable tool and the work piece then this will become apparent to him during the manual movement of the tool holder 13, immediately that pressure starts to be applied to the tool holder 13 by the spring 25 at the commencement of the lost motion of the levers 19 relative to the tool holder 13. Even if this pressure does not alert the operator then even though the control valve 31 will be operated by the relative movement of the levers 19 and 26 the valve 33 will not be actuated since with a finger between the moveable tool and the work piece it will not be possible for the levers 19 to reach the predetermined point in their stroke of movement at which the cam 32 operates the valve 33. However in the event that the valve 33 has been improperly actuated by an operator setting up the machine, or seeking for some other reason to override the safely facilities then it still is not possible to apply the power stroke of the ram 34 to the tool holder 13 since with, for example, a finger positioned between the moveable tool and the workpiece the tool holder 13 and its extension 13a will not have descended sufficiently far for the edge of the extension 13a to clear the edge of the slipper 44 of the block 38. Thus although the ram 34 will be energized it will not perform a power stroke since the piston 36 will be held against movement by abutment of the surface 43 of the block 38 with the vertically extending surface of the extension 13a.

When the press is operating normally it will be recognised that the power stroke of the ram 34 applies a "squeezing" action by way of the slipper 44 and the roller 42 rather than an abrupt "hammer blow" as is the case with the ram arrangement in British patent 1091061.

As can be seen in Figure 4 the valve 31 is connected by the way of a line 51 to a metered air pressured supply 50. Operation of the valve 51 causes connection of the line 51 by way of a line 52 to an input of the valve 33, and actuation of the valve 33 applies source pressure by way of the line 51 and the line 52 to a line 53 controlling the position of the spool of a change over valve 54. An input of the valve 54 is connected through a line 55 to the source 50 and the outputs 56, 57 of the valve 54 are connected respectively to opposite ends of the ram 34. Actuation of both of valves 51 and 33 causes actuation of valve 54 to reverse the position of the valve from that shown in Figure 4 and thus to apply source pressure by way of

0212869

the line 55 and the output 56 to the left hand end of the piston 36 of the ram 34.

When the ram 34 reaches the far extent of the its travel in an operative direction the piston exposes a port in the wall of the cylinder 35 whereby pressure from the source 50 is applied to a NOT valve 58, which in turn will apply pressure by way of the line 59 (shown as a broken line in figure 4) to an OR valve 61 and thence to the spool of the valve 54 to return the spool and so restore the valve 54 to the position illustrated in Figure 4 wherein the line 55 communicates with the output 57 and the piston 36 is thus driven through its return stroke.

It will be recognised that in event that the piston 36 is impeded, and thus does not perform its full operating stroke, then the NOT valve 58 will not be actuated and the spool of the valve 54 will not be returned automatically to initiate the return/stroke of the piston. Thus in order to permit resetting of the press to its condition there is provided a manually operable change over valve 62 similar to the valve 31, 33 except that it is operated directly by a manually operable push button 63. As with the valves 31 and 33 the valve 62 is spring urged to a rest condition. An inlet 64 of the 62 is connected to the line 55 and thus sees source pressure. An output 65 of the valve 62 is connected to the OR valve 61 and a connection exists between the input 64 and the output 65 when the push button 63 is manually operated. Thus upon manual operation of the push button 63 source pressure is applied by way of the valve 62 to the OR valve 61 and thence to the valve 54 to return the valve 54 to its original condition, whereupon the return stroke of the piston 36 of the ram 34 is initiated. Upon release of the push button 63 the valve 62 restores to its original condition wherein the input 64 is disconnected from the output 65.

CLAIMS.

1.      A pneumatic press comprising a frame (11), a fixed tool support (12) carried by the frame (11), a movable tool holder (13) mounted for rectilinear sliding movement on the frame (11) towards and away from said fixed tool support (12), manually operable means (19, 23) for manually moving said tool holder (13) relative to said frame (11) towards said fixed tool support (12), a pneumatic ram (34) for driving said tool holder (13) in a power stroke, a lost motion connection (16, 17) between said tool holder (13) and said manually operable means (19, 23) whereby said manually operable means (19, 23) can move through a predetermined stroke relative to said tool holder (13) against the action of resilient means (25), and, first and second control devices (31, 33) both of which must simultaneously be in an actuated state in order for said ram to be energised, a first (31) of said control devices being actuated as a result of relative movement between said manually operable means (19, 23) and said tool holder (13), and the second (33) of said control devices being actuated by said manually operable means (19, 23) reaching a position relative to said frame (11) corresponding to said tool holder (13) reaching its said predetermined position and substantially the whole of said stroke of movement of said manually operable means (19, 23) relative to said tool holder (13) having been accomplished, the press being characterized in that said pneumatic ram (34) is positioned with its longitudinal axis generally transverse to the direction of movement said tool holder (13) and the piston (36) of the ram (34) is co-operable with said tool holder (13) by way of movement translation means (38, 39, 41, 42, 44) whereby operating movement of said piston (36) is translated into operative movement of the tool holder (13) in a direction substantially perpendicular to the direction of movement of said piston (36), the press further comprising co-operating abutment means (42, 42) on said ram piston (36) and said tool holder (13) physically preventing operative movement of said piston (36) relative to said tool holder (13) until the tool holder (13) has been moved from a rest position to a predetermined point in its path of movement towards said fixed tool support (12), said predetermined point corresponding substantially to the point at which a tool carried by the tool holder (13) in use would engage correctly with a workpiece properly seated on a fixed tool carried in use by said fixed tool support.

2.    A press as claimed in claim 1 characterized in that said movement translation means comprises a roller (42) carried by one of the two components constituted by the tool holder (13) and the piston (36), and a surface (44) engagable with said roller (42) and carried by the other of said components (13, 36).

3.    A press as claimed in claim 2 characterized in that said roller (42) is rotatably mounted on said tool holder (13) and said surface (44) is carried by said piston (36).

4.    A press as claimed in anyone of claims 1 to 3 characterized in that said abutment means on said piston (36) comprises an abutment surface (43) extending parallel to the direction of movement of said tool holder (13).

5.    A press as claimed in claim 3 characterized in that said abutment means comprises said roller, and, an abutment surface (43) carried by said piston (36) and extending parallel to the direction of movement of the tool holder (13).

FIG 1

0212869

FIG 2

FIG 3

FIG 4

European Patent
Office

**EUROPEAN SEARCH REPORT**

## DOCUMENTS CONSIDERED TO BE RELEVANT

EP 86305771.7

| Category | Citation of document with indication, where appropriate, of relevant passages | Relevant to claim | CLASSIFICATION OF THE APPLICATION (Int. Cl.4) |
|---|---|---|---|
| X | GB - A - 1 376 877 (AMP)  \* Fig. 2,3,5; page 1, lines 88-90 \* | 1,2,3 | H 01 R 43/042 |
| | -- | | |
| A | DE - A1 - 2 455 057 (BUNKER)  \* Claim 20 \* | | |
| | ---- | | |

TECHNICAL FIELDS
SEARCHED (Int. Cl.4)

H 01 R

The present search report has been drawn up for all claims

| Place of search | Date of completion of the search | Examiner |
|---|---|---|
| VIENNA | 15-10-1986 | GLAUNACH |

EPO Form 1503 03.82